# FASCICULE DE BREVET EUROPEEN

(11) **EP 0 597 742 B1**
(45) Date de publication et mention de la délivrance du brevet: **12.03.1997**
(21) Numéro de dépôt: 93402543.8
(22) Date de dépôt: 15.10.1993
(51) Int. Cl.: B01D 63/06, B01D 63/02

(54) **Module de filtration**
Filtrationsmodul
Filtration module

(30) Priorité: 12.11.1992 FR 9213604
(43) Date de publication de la demande: 18.05.1994
(73) Titulaire: TECH-SEP, F-92408 Courbevoie Cédex (FR)
(72) Inventeur: Bathelet, Pierre, F-69110 Sainte Foy Les Lyon (FR)
(74) Mandataire: Seugnet, Jean Louis

(56) Documents cités:
- EP-A- 0 062 086
- EP-A- 0 270 051
- EP-A- 0 343 895
- FR-A- 2 306 000
- PATENT ABSTRACTS OF JAPAN vol. 15, no. 353 (C-865)6 Septembre 1991 & JP-A-03 137 924 (AKUA RUNESANSU GIJUTSU KENKYU KUMIAI) 12 Juin 1991 & JP-A-3 137 924 (AKUA RUNESANSU GIJUTSU KENKYU KUMIAI) 12 Juin 1991 & DATABASE WPI Section Ch, Week 9130, Derwent Publications Ltd., London, GB; Class D04, AN 91-217768 & JP-A-3 137 924 (AQUA RENAISSANCE G.I.) 12 Juin 1991

## Description

La présente invention concerne un module de filtration plus particulièrement de micro- et d'ultrafiltration comportant un faisceau de membranes minérales tubulaires.

Du fait de leurs grandes résistances aux contraintes physico-chimiques, les membranes sont de plus en plus utilisées pour la filtration de fluides industriels divers.

Ces modules sont décrits dans un grand nombre de publications et de brevets par exemple dans le brevet US-A-3.977.967.

Un exemple de mode de réalisation d'un tel module est représenté sur le dessin annexé sur lequel :
- la figure 1 est une vue en perspective cavalière d'un module de filtration,
- la figure 2 est une vue éclatée de la figure 1 avec représenté en outre, à chacune des extrémités du module, un collier de serrage et son joint,
- la figure 3 est une coupe partielle au niveau de l'extrémité d'une membrane et comportant un joint de l'art antérieur.

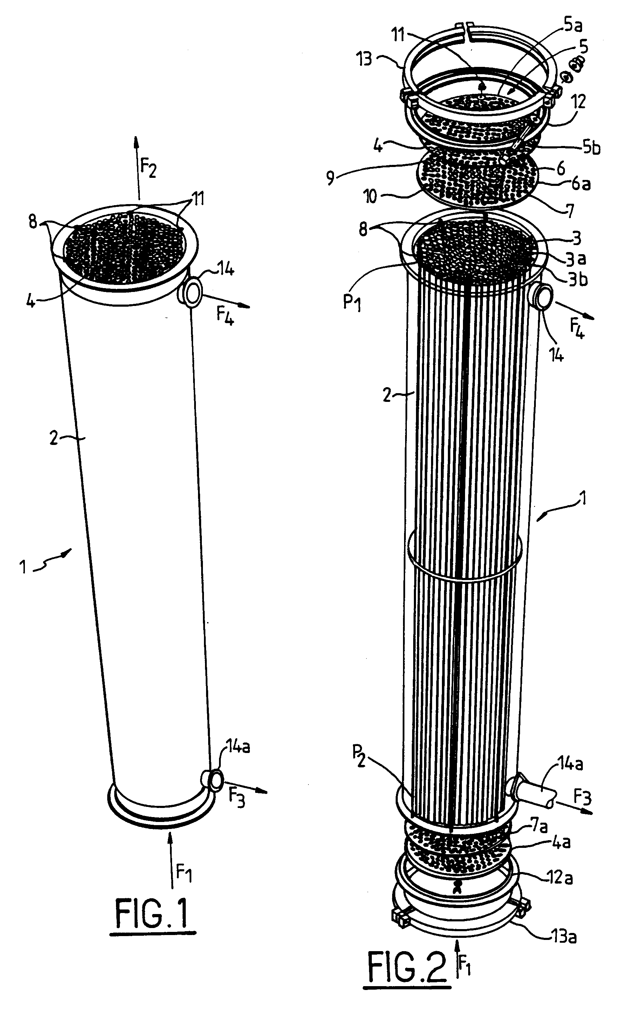

Sur la figure 1, on voit que le module de filtration 1 est constitué d'un carter cylindrique 2 à l'intérieur duquel sont logés une pluralité de membranes tubulaires minérales 3, 3a, 3b disposées parallèlement en faisceau à travers au moins deux plaques perforées situées aux 2 extrémités du carter.

Le faisceau de membranes est maintenu à chacune de ses 2 extrémités par une contreplaque 4 et 4a alésée d'autant de trous 5, 5a et 5b qu'il y a de membranes.

Chaque membrane 3, 3a, 3b pénètre dans le trou 5, 5a, 5b de la contreplaque correspondante au travers du trou correspondant 6, 6a ménagé à travers le joint 7, 7a en élastomère.

A la périphérie du carter 2, sont disposées des tiges filetées 8 sur lesquelles sont fixées le joint 7 et la contreplaque 4, au travers des trous 9 et 10 ménagés respectivement dans la contreplaque et dans le joint et au moyen de l'écrou 11.

On effectue le serrage du joint. On dispose sur la tête du module un joint d'étanchéité 12, 12a. L'ensemble tuyauterie et module est maintenu bloqué par un collier 13, 13a ou par un système de brides.

Sur la figure 2, on voit la membrane 3 qui est logée à travers les perforations de la plaque support P₁, du joint 7 et de la contreplaque 4.

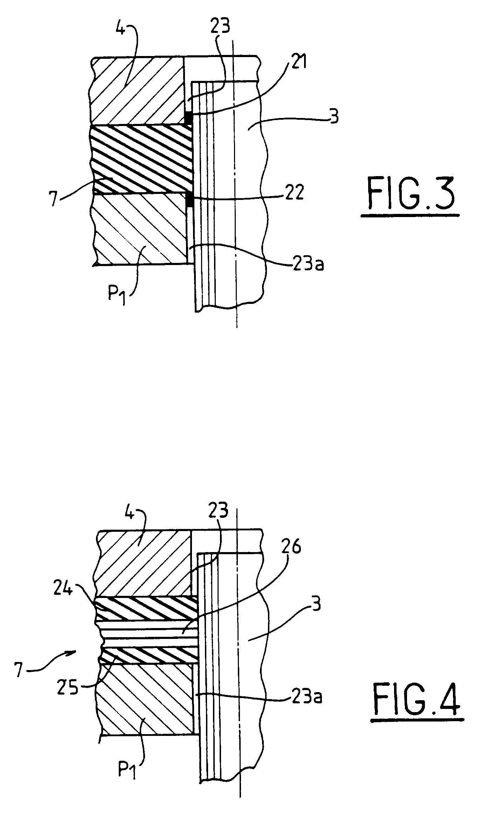

Sur les figures 2 et 3, on a représenté un joint 7 de dureté shore A inférieure à 60 et qui présente deux bourrelets d'extrusion 21 et 22 qui ont flué dans le jeu 23 existants entre les plaques 4 et P₁ et la membrane 3.

Le module 1 de filtration fonctionne de la façon suivante :

Le liquide à traiter pénètre dans le sens de la flèche F₁ et ressort à l'autre extrémité du module suivant la flèche F₂.

Le perméat qui est passé à l'extérieur des membranes et à l'intérieur du module 2 ressort par les ouvertures 14, 14a suivant les flèches F₃ et F₄.

Dans les modules de filtration du type représenté sur les figures 1, 2 et 3 la pièce délicate est le joint 7, 7a.

En effet, ce joint est une pièce d'importance capitale puisqu'elle assure l'étanchéité entre, d'une part, le perméat circulant à l'intérieur du carter 2 et à l'extérieur des membranes 3 et d'autre part, le rétentat circulant à l'intérieur des membranes à travers le module et venant s'écouler à l'extrémité des membranes.

Ce joint doit être suffisamment mou pour assurer une étanchéité correcte.

L'utilisation de joints polymériques souples dans des modules d'éléments séparateurs à support céramique est décrite dans EP-A-0270051.

Cependant, dans le cas de joint mou comme on le voit sur la figure 3, il arrive très souvent que, lors des montées en température du rétentat et sous l'effet de la contrainte de serrage des plaques P₁ et P₂ et des contreplaques 4, 4a sur le joint 7, 7a, le joint 7, 7a extrude suivant un bourrelet 21, 22 dans le jeu 23, 23a existant entre les membranes, les plaques et les contreplaques.

Ces montées en température du rétentat peuvent atteindre 130°C environ lors de la stérilisation à la vapeur des membranes par exemple, ou bien pour certains procédés industriels qui nécessite une température élevée supérieure à 100°C.

Cette extrusion du joint 7, 7a et les mouvements relatifs entre les membranes et l'enveloppe lors des dilatations provoquent une détérioration du joint et par suite une perte d'étanchéité.

Par ailleurs, la compacité des modules d'ultrafiltration et les tolérances dimensionnelles importantes des membranes minérales tubulaires ne permettent ni de réduire les jeux ni d'employer des bagues anti-extrusion enserrant les joints 7, 7a.

En outre, l'emploi de joints 7, 7a de dureté plus élevée permet certes de supprimer le phénomène d'extrusion mais le manque de souplesse du joint empêche de réaliser l'étanchéité de toutes les membranes du module.

La présente invention a permis précisément de résoudre le problème ci-dessus. Elle concerne en effet un module 1 de filtration comportant un faisceau de membranes 3, 3a, 3b disposées à l'intérieur d'un carter et maintenues à chacune de leurs 2 extrémités par une plaque perforée P₁ et P₂, un joint perforé 7, 7a et une contreplaque perforée 4, 4a, chaque extrémité de membrane traversant consécutivement les perforations alignées d'une plaque P₁, P₂, d'un joint 7, 7a et d'une contreplaque 4, 4a, caractérisé en ce que chacun desdits joints est constitué dans son épaisseur de 3 zones superposées, les 2 zones externes ayant une dureté shore A au moins égale à 65 et la zone centrale ayant une dureté shore A inférieure à 55.

La zone centrale a de préférence une dureté shore A comprise entre 45 et 50 et les 2 zones externes ont une dureté shore A comprise de préférence entre 70 et 75.

Le joint peut être constitué d'une pièce unique comportant dans son épaisseur les 3 zones précitées ou bien encore le joint peut être composite et formé de l'empilement de 3 feuilles dont les duretés sont celles des 3 zones précitées.

L'invention sera mieux comprise à la lecture de l'exemple de réalisation ci-dessous donné à titre illustratif nullement limitatif, référence sera faite au dessin annexé sur lequel la figure 4 représente comme la figure 3 une coupe partielle au niveau de l'extrémité d'une membrane 3 mais avec un joint 7 conforme à celui utilisé dans l'invention.

Sur la figure 4, on voit que le joint 7 est formé de 2 feuilles externes 24 et 25 de dureté shore A supérieure ou égale à 65 enserrant une feuille interne 26 de dureté shore A inférieure à 55.

De préférence, les feuilles 24, 25 et 26 ont des épaisseurs sensiblement analogues. De plus, les 3 feuillets superposés ont une épaisseur totale sensiblement analogue au joint mou de la figure 3 formé d'une seule feuille.

Dans l'exemple représenté sur les figures 1 et 2, le module comporte un faisceau de 120 membranes, chaque membrane a 1,2 m de long, un diamètre interne de 0,6 cm et un diamètre externe de 1 cm.

Le joint 7 est composé d'une feuille interne 26 de dureté shore A de 50 prise en sandwich par 2 feuilles de dureté shore A de 75. Chaque feuille a une épaisseur d'environ 2,10 mm. Les 3 feuilles sont en caoutchouc butyle.

Le module d'ultrafiltration selon l'invention est soumis au cycle de stérilisation comportant les étapes suivantes :
- mouillage des membranes à 6 bars pendant 20 mn,
- 1er cycle de passage de vapeur à 122°C pendant 18 mn; refroidissement 3 heures,
- 2ème cycle de passage de vapeur à 122°C pendant 29 mn, puis à 125°C pendant 15 mn; refroidissement 2 heures,
- 3ème cycle de passage de vapeur pendant 25 mn et refroidissement 10 heures,
- mouillage des membranes à 6 bars pendant 15 mn,
- 4ème cycle de stérilisation à 125°C pendant 35 mn : refroidissement 4 heures et pression de vapeur 1 bar.

On démonte ensuite sans difficulté les contreplaques et on ne constate aucune extrusion apparente du joint 7.

N'importe quelle matière élastomère adaptée peut être utilisée pour réaliser le joint 7. On recommande toutefois d'utiliser comme élastomère une silicone, un caoutchouc butyle ou nitrile ou du Viton ®.

Le joint composite 7 peut être fabriqué par l'enpilement des feuilles de dureté shore A adaptée suivi d'une découpe sous pression pour réaliser les trous. On peut également envisager que le joint composite 7 soit réalisé en une seule feuille mais présentant dans son épaisseur une couche de dureté shore A adaptée obtenue en faisant varier par exemple la composition de l'élastomère (charge, catalyseur, plastificant, etc...).

## Revendications

1. Module (1) de filtration comportant un faisceau de membranes (3, 3a, 3b) disposées à l'intérieur d'un carter (2) et maintenues à chacune de leurs deux extrémités par une plaque perforée (P₁, P₂), un joint perforé (7, 7a) et une contreplaque perforée (4, 4a), chaque extrémité de membrane traversant consécutivement les perforations alignées d'une plaque (P₁, P₂), d'un joint (7, 7a) et d'une contreplaque (4, 4a), caractérisé en ce que chacun desdits joints (7, 7a) est constitué dans son épaisseur de trois zones superposées (24, 25, 26), les deux zones externes (24, 25) ayant une dureté shore A au moins égale à 65 et la zone centrale (26) ayant une dureté shore A inférieure à 55.

2. Module selon la revendication 1, caractérisé en ce que la zone centrale (26) a une dureté shore A comprise entre 45 et 50 et les zones externes (24, 25) ont une dureté shore A comprise entre 70 et 75.

3. Module selon la revendication 1 ou 2, caractérisé en ce que chacun desdits joints (7, 7a) est constitué d'une pièce unique.

4. Module selon la revendication 1 ou 2, caractérisé en ce que chacun desdits joints (7, 7a) est composite et est formé de l'empilement de trois feuilles dont les duretés shore A correspondent à celles des trois zones (24, 25, 26).

## Claims

1. A filtration module (1) comprising a bundle of membranes (3, 3a, 3b) disposed inside a housing (2) and held at each of its two extremities by a perforated plate (P₁, P₂), a perforated gasket (7, 7a) and a perforated backplate (4, 4a), each membrane extremity passing consecutively through the aligned perforations of a plate (P₁, P₂), a gasket (7, 7a) and a backplate (4, 4a), characterized in that each of said gaskets (7, 7a) is constituted by three superimposed zones (24, 25, 26) across its thickness, the two external zones (24, 25) having a Shore hardness A of at least 65 and the central zone (26) having a Shore hardness of less than 55.

2. A module according to claim 1, characterized in that the central zone (26) has a Shore hardness in the range 45 to 50 and the external zones (24, 25) have a Shore hardness in the range 70 to 75.

3. A module according to claim 1 or claim 2, characterized in that each of said gaskets (7, 7a) is constituted by a single piece.

4. A module according to claim 1 or claim 2, characterized in that each of said gaskets (7, 7a) is composite and is formed by three layers of sheets with Shore hardnesses which correspond to those of the three zones (24, 25, 26).

## Patentansprüche

1. Filtrationsmodul (1) mit einem Bündel von Membranen (3, 3a, 3b), die im Innern eines Gehäuses (2) angeordnet und an jedem ihrer beiden Enden durch eine perforierte Platte (P₁, P₂) gehalten sind, einer perforierten Dichtung (7, 7a) und einer perforierten Gegenplatte (4, 4a), wobei jedes Membranende aufeinanderfolgend die fluchtenden Perforationen einer Platte (P₁, P₂), einer Dichtung (7, 7a) und einer Gegenplatte (4, 4a) durchsetzt, dadurch gekennzeichnet, daß jede der Dichtungen (7, 7a) in ihrer Dickenrichtung aus drei übereinanderliegenden Zonen (24, 25, 26) gebildet ist, wobei die beiden äußeren Zonen (24, 25) eine Shore-A-Härte von wenigstens gleich 65, und wobei die zentrale Zone (26) eine Shore-A-Härte kleiner als 55 aufweist.

2. Modul nach Anspruch 1, dadurch gekennzeichnet, daß die zentrale Zone (26) eine Shore-A-Härte zwischen 45 und 50 aufweist, und die äußeren Zonen (24, 25) eine Shore-A-Härte zwischen 70 und 75 aufweisen.

3. Modul nach Anspruch 1 oder 2, dadurch gekennzeichnet, daß jede der Dichtungen (7, 7a) aus einem einzigen Stück gebildet ist.

4. Modul nach Anspruch 1 oder 2, dadurch gekennzeichnet, daß jede der Dichtungen (7, 7a) ein Verbundstoff ist und durch die Aufeinanderschichtung von drei Schichten gebildet ist, deren Shore-A-Härten denjenigen der drei Zonen (24, 25, 26) entsprechen.
